# FASCICULE DE BREVET EUROPEEN

(11) **EP 3 123 076 B1**
(45) Date de publication et mention de la délivrance du brevet: **26.06.2019**
(21) Numéro de dépôt: 15714875.0
(22) Date de dépôt: 18.03.2015
(51) Int. Cl.: G02B 19/00, F21V 13/04

(54) **COLLIMATEUR OPTIQUE**
OPTISCHER KOLLIMATOR
OPTICAL COLLIMATOR

(30) Priorité: 28.03.2014 FR 1452747
(43) Date de publication de la demande: 01.02.2017
(73) Titulaire: Gaggione SAS, 01460 Montréal-la-Cluse (FR)
(72) Inventeur: LAURET, Jean-Pierre, F-01100 Oyonnax (FR)
(74) Mandataire: Delorme, Nicolas
(86) Numéro de dépôt international: PCT/FR2015/050655
(87) Numéro de publication internationale: WO 2015/145026

(56) Documents cités:
- US-A1- 2002 080 615
- US-A1- 2009 268 166

## Description

La présente invention concerne un collimateur optique destiné à collimater un faisceau issu d'une source lumineuse permettant de limiter les pertes de Fresnel.

Dans les collimateurs conventionnels, les faisceaux incidents sont transmis par réfraction à travers une surface d'entrée. Cette surface d'entrée est une surface optique séparant deux matériaux d'indice de réfraction différents. De ce fait, une portion du faisceau incident est réfléchie par la surface d'entrée du collimateur au lieu d'être transmise, cela constitue les pertes de Fresnel par réflexion. Pour les matériaux optiques courants, cette portion réduit d'environ 4% la transmission lumineuse globale. Cette portion de faisceau est ensuite réfléchie par une surface extérieure de réflexion du collimateur puis est transmise en formant un angle élevé par rapport à l'axe optique par une surface de sortie du collimateur. Ainsi, cette portion de faisceau forme alors un anneau périphérique parasite autour du faisceau de lumière principal provenant de la collimation du faisceau lumineux incident. Ceci diminue la qualité de l'éclairage obtenu, qui de la sorte, ne convient pas à toutes les applications souhaitées, notamment les applications du domaine du médical. Des collimateurs conventionnels sont divulgués dans les documents US 2002/080615 et US 2009/268166.

Un collimateur permettant de pallier au moins l'un de ces inconvénients est donc souhaitable. A cet effet, la présente invention propose un collimateur optique destiné à collimater un faisceau issu d'une source lumineuse, le collimateur présentant une forme globale de bol, le collimateur comprenant une symétrie de révolution autour de l'axe optique du collimateur, une paroi de sortie, un évidement d'entrée opposé à la paroi de sortie, l'évidement d'entrée étant défini par une paroi latérale interne et une paroi supérieure interne contiguë à la paroi latérale interne de manière à définir une zone d'intersection, la paroi latérale interne et la paroi supérieure interne étant destinées à l'entrée, respectivement périphérique et centrale, d'un faisceau lumineux incident dans le collimateur, une paroi de réflexion périphérique joignant la paroi de sortie à la paroi latérale interne, la surface de la paroi latérale interne étant configurée de sorte qu'une droite D tangente à la paroi latérale interne et joignant la zone d'intersection passe par le foyer du collimateur. Ainsi, dans cette configuration, les rayons incidents qui auraient été responsables de la formation d'un anneau périphérique parasite sont réfléchis sur la paroi latérale interne selon une incidence rasante. En conséquence, la réflexion de ces rayons permet une refocalisation vers la paroi supérieure interne où ils sont collectés comme s'ils provenaient d'un faisceau provenant d'un point à proximité du foyer. Les rayons refocalisés s'ajoutent alors au faisceau principal qui est plus lumineux. Par ailleurs, l'anneau annulaire parasite est fortement diminué.

Il est entendu dans le présent document que la paroi latérale interne et la paroi supérieure interne sont destinées à l'entrée de rayons lumineux incidents, la paroi de réflexion périphérique est destinée à réfléchir les rayons interceptés par la paroi latérale interne et la paroi de sortie est destinée à faire émerger les rayons lumineux.

Bien entendu, dans tout le document, la paroi de réflexion périphérique est mutuellement configurée avec la paroi latérale interne de sorte à collimater un faisceau lumineux incident.

Avantageusement, la paroi latérale interne présente une surface curviligne à symétrie de révolution autour de l'axe optique du collimateur.

De préférence, la paroi latérale interne comprend une portion convexe configurée de sorte à intercepter en un même point A un rayon central issu du foyer et un rayon marginal virtuel prolongeant un rayon marginal réel issu de la périphérie de la source lumineuse, le rayon marginal réel étant intercepté en un point B de la paroi latérale interne et de sorte que la paroi de réflexion périphérique réfléchisse le rayon central en un point A' et le rayon marginal réel en un point B' avec le point A distinct du point B et le point A' présentant un éloignement par rapport au foyer supérieur à celui du point B'.

Grâce à cette configuration, le rayon marginal réel est intercepté plus tôt dans son cheminement par la paroi latérale interne qui le réfracte vers la paroi de réflexion périphérique. Il émerge ensuite de la paroi de sortie en étant collimaté, c'est-à-dire sensiblement parallèle à l'axe optique. Le cheminement du rayon marginal réel est alors sensiblement identique à celui d'un rayon central provenant d'un point proche du foyer. Cette configuration du collimateur permet ainsi de collimater des rayons lumineux assez éloignés du foyer sans pour autant nécessiter de prolonger la paroi de réflexion interne. Dans l'art antérieur en effet, il est connu de prolonger la paroi de réflexion interne pour intercepter des rayons lumineux provenant de points éloignés du foyer. Mais cette solution a pour effet d'éloigner la conception du collimateur de sa conformation idéale et de le rendre plus volumineux. Ainsi, la présente invention permet de collimater des sources lumineuses plus étendues que celles pouvant être collimatées par des collimateurs de configuration classique.

De préférence, la paroi latérale interne comprend une zone annulaire définie depuis le foyer sous un angle solide α (alpha) compris entre 35° et 90° par rapport à l'axe optique, la tangente de la zone annulaire formant un angle β (bêta) compris entre 0° et 30° par rapport à l'axe optique. Cette zone annulaire présente ainsi une pente relativement peu prononcée permettant à cette zone de la paroi latérale interne de se retrouver au plus près de la source lumineuse. Ceci permet d'éclairer une plus grande superficie au voisinage de la surface de sortie du collimateur. Selon la loi de conservation de l'étendue géométrique qui dit que le faisceau lumineux est d'autant plus intense que sa section est grande, cette configuration permet ainsi l'obtention d'un faisceau lumineux plus intense.

Avantageusement, le collimateur est monobloc. Sa fabrication ne nécessite donc pas d'étape d'assemblage entre plusieurs pièces, ce qui permet de réduire la main d'oeuvre et ainsi de réduire les coûts.

De préférence, le collimateur est constitué de polymère ce qui permet une fabrication par moulage.

Avantageusement, le matériau constituant le collimateur monobloc présente une dureté shore-A inférieure ou égale à 90, de préférence une dureté shore-A comprise entre 50 et 80 et de façon encore préférée une dureté shore-A d'environ 70.

De préférence, le polymère est choisi parmi un silicone, une résine de polyuréthane ou tout autre matériau transparent dans le domaine visible, souple à température ambiante et thermodurcissable. La souplesse de ces matériaux, définie par les plages de dureté shore-A indiquées ci-dessus, permet un démoulage aisé du collimateur notamment lorsqu'il est monobloc malgré sa conception comprenant une région convexe formant une contre-dépouille.

Selon une variante, le collimateur est composé de plusieurs éléments assemblés. Chacun des ces éléments sont avantageusement constitués d'un polymère thermoplastique transparent dans le visible. Parmi ces polymères, il est par exemple choisi le polycarbonate, le PMMA, la cyclo-oléfine copolymère, le polystyrène et le polyamide.

Selon une possibilité, la paroi supérieure interne comprend une portion présentant une surface convexe. Cette conformation est calculée classiquement de sorte à transmettre une majorité de rayons incidents vers la paroi de sortie en formant un faisceau collimaté.

Selon encore une autre possibilité, la paroi de sortie comprend une portion présentant une surface sensiblement plane. Il est ainsi possible de focaliser la lumière à l'infini.

En variante, la paroi de sortie comprend une portion présentant une surface sensiblement concave. Cette variante est notamment avantageuse sur les collimateurs aux dimensions importantes car elle permet un gain de matière conséquent.

Selon une autre variante, la paroi de sortie comprend une portion présentant une surface sensiblement convexe, de sorte à faire converger les rayons lumineux en provenance du foyer. Cette configuration permet ainsi de focaliser la lumière en champ proche.

Selon encore une autre variante, la paroi de sortie est partagée entre une zone centrale et une zone périphérique, la surface de la zone centrale étant configurée pour partager la réfraction du faisceau lumineux incident avec la paroi supérieure interne de sorte à obtenir un faisceau collimaté et la surface de la zone périphérique étant configurée pour fonctionner en association avec la paroi de réflexion périphérique. Ces configurations permettent d'ajouter des degrés de liberté à la conception optique du collimateur. Cette configuration de la surface de la zone centrale permet d'optimiser plus finement la distribution d'intensité lumineuse. La configuration de la surface de la zone périphérique peut par ailleurs être concave, convexe ou texturée par exemple afin d'améliorer sa capacité à faire converger, diverger les rayons lumineux, etc.

Avantageusement, la zone centrale présente une périphérie en forme de cercle et la zone périphérique présente une forme annulaire délimitant la périphérie de la zone centrale.

Selon une possibilité, la paroi de sortie présente une surface comprenant une microtexturation configurée pour générer un type de faisceau lumineux à partir de la source lumineuse tel qu'un faisceau intermédiaire, un faisceau large ou un faisceau elliptique. Il est ainsi possible d'obtenir différentes distributions d'intensité lumineuse à partir d'un faisceau intensif qui est le faisceau de base sans microtexturation. Le faisceau intensif de base sera par exemple de 10° FWHM (acronyme anglais de Full Width Half Maximum), le faisceau intermédiaire permettant d'atteindre environ 25° FWHM, le faisceau large permettant d'atteindre environ 40° FWHM et le faisceau elliptique permettant d'atteindre environ 10°x40° FWHM.

D'autres aspects, buts et avantages de la présente invention apparaîtront mieux à la lecture de la description suivante de différents modes de réalisation de celle-ci, donnés à titre d'exemples non limitatifs et faits en référence aux dessins annexés. Les figures ne respectent pas nécessairement l'échelle de tous les éléments représentés de sorte à améliorer leur lisibilité. Dans la suite de la description, par souci de simplification, des éléments identiques, similaires ou équivalents des différentes formes de réalisation portent les mêmes références numériques.
- Les figures 1 et 2 représentent un collimateur classique connu de type « flat top tulip ».
- Les figures 3 et 4 représentent un collimateur selon un premier mode de réalisation selon l'invention.
- La figure 5 illustre une zone annulaire du collimateur illustré aux figures 3 et 4.
- La figure 6 illustre un collimateur selon un deuxième mode de réalisation selon l'invention.
- La figure 7 illustre un collimateur selon un troisième mode de réalisation selon l'invention.

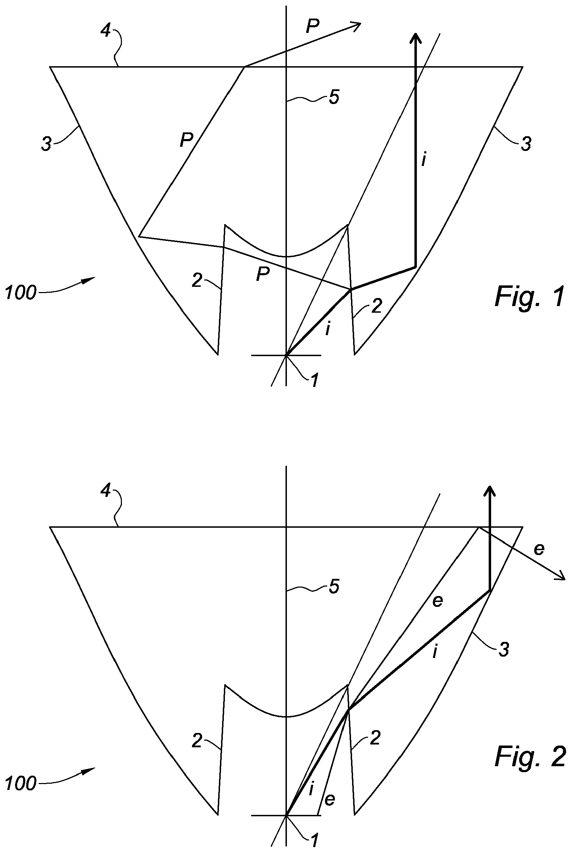

La figure 1 illustre le cheminement d'un faisceau incident dans un collimateur optique classique 100. Une partie du faisceau partant du foyer 1 du collimateur 100 est tout d'abord réfractée sur une paroi latérale interne 2 d'entrée formant un faisceau principal i qui est ensuite réfléchi sur une paroi de réflexion périphérique 3 pour émerger d'une paroi de sortie 4 de façon sensiblement parallèle à l'axe optique 5 du collimateur 100. L'autre partie du faisceau incident est réfléchie par la paroi d'entrée 2 latérale suivant la réflexion de Fresnel. Ceci donne naissance à un faisceau parasite p qui émerge par la paroi de sortie 4 avec un angle élevé par rapport à l'axe optique 5. Cette réflexion parasite ou perte de Fresnel contribue à diminuer le rendement lumineux global jusqu'à environ 4%. Le faisceau parasite p est également à l'origine d'un anneau lumineux parasite autour du faisceau principal i collimaté (non illustré).

La figure 2 illustre le cheminement d'un faisceau e incident issu de la périphérie d'une source lumineuse, il est donc éloigné du foyer 1 du collimateur 100 classique. Ce cheminement est comparé avec le trajet d'un faisceau i issu du foyer 1 qui émerge de la paroi de sortie 4 en suivant un axe parallèle à l'axe optique 5 et qui est parfaitement collimaté. Comme l'illustre la figure 2, le faisceau e éloigné n'est pas efficacement collecté. Le faisceau e éloigné transite par la paroi latérale interne 2 et la paroi de sortie 4 sans être focalisé sur la paroi de réflexion périphérique 3 car cette dernière n'a pas une taille suffisamment importante pour pouvoir l'intercepter. En effet, si la paroi de réflexion périphérique 3 était prolongée, elle intercepterait le faisceau e éloigné avant que celui-ci n'atteigne la paroi de sortie 4. En conséquence, comme représenté sur la figure 2, le faisceau e émerge du collimateur 100 en étant réfléchi par la paroi de sortie 4 et en formant un angle élevé avec l'axe optique 5, au contraire du faisceau i issu du foyer 1 qui est intercepté par la paroi de réflexion périphérique 3 avec un angle permettant une transmission par la paroi de sortie 4. Le faisceau e issu du bord de la source est donc à l'origine, selon l'architecture du collimateur 100, d'une perte d'intensité lumineuse ou de formation de lumière parasite.

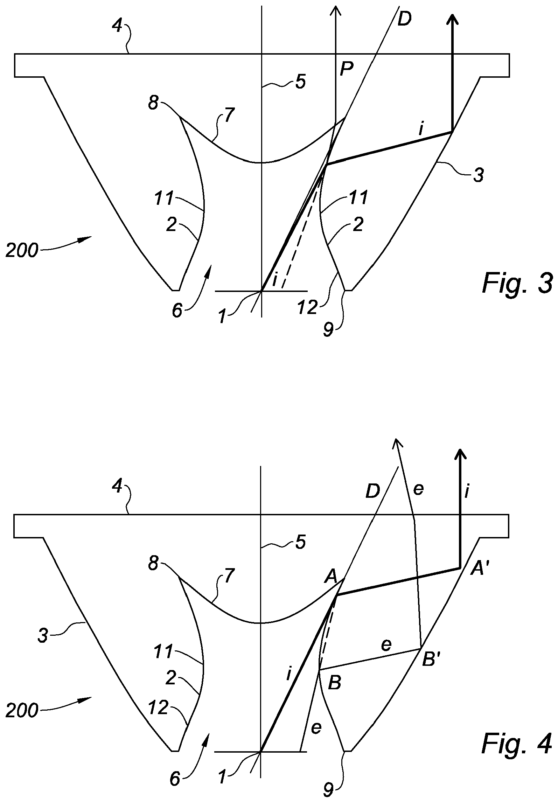

La figure 3 est un collimateur 200 selon un premier mode de réalisation de l'invention. Ce collimateur 200 comprend une forme globale de bol avec une symétrie de révolution autour de son axe optique 5. Le collimateur 200 comprend une paroi de sortie 4, un évidement d'entrée 6 opposé à la paroi de sortie 4 et une paroi de réflexion périphérique 3 joignant la paroi de sortie 4 à l'évidement d'entrée 6. La paroi de sortie 4 permet la transmission des rayons sensiblement collimatés hors du collimateur 200. Cette paroi de sortie 4 est plane mais selon des variantes non illustrées, la paroi de sortie 4 comprend une portion dont la surface est convexe ou concave. Selon encore une possibilité, la surface de la paroi de sortie 4 comprend une micro-texturation.

L'évidement d'entrée 6 du collimateur 200 est destiné à l'entrée des faisceaux incidents provenant de la source lumineuse. Il est composé d'une paroi latérale interne 2, dont la surface est curviligne tout en conservant la symétrie à révolution autour de l'axe optique 5, et d'une paroi supérieure interne 7 comprenant une portion de surface convexe. Le foyer 1 du collimateur 200 est situé en bordure périphérique de l'évidement 6, face à la paroi supérieure interne 7. La paroi supérieure interne 7 entrecoupe la paroi latérale interne 2 en définissant une zone d'intersection 8 de la forme d'un cercle. Comme illustré à la figure 3, la surface de la paroi latérale interne 2 est configurée de sorte qu'une droite D passant par le foyer 1 du collimateur 200 et l'intersection 8 entre la paroi supérieure interne 7 et la paroi latérale interne 2 est tangente à la paroi latérale interne 2. A cet effet, la surface de la paroi latérale interne 2 et la surface de la paroi de réflexion périphérique 3 peuvent être calculées selon deux voies distinctes.

Selon une première possibilité, la paroi latérale interne 2 est calculée pour présenter une géométrie prédéfinie à symétrie de révolution autour de l'axe optique 5, par exemple un arc de cercle ou forme curviligne continue. Ensuite la surface de la paroi latérale interne 2 est calculée de manière à présenter une tangente au point d'intersection 8 avec la paroi supérieure interne 7 passant par le foyer 1. Les autres paramètres de la paroi latérale interne 2 sont définis arbitrairement.

Ensuite, un paquet de rayons lumineux partant du foyer 1 et interceptant la paroi latérale interne 2 sont considérés selon la loi de la réfraction ni x sin (il) = n2 x sin (i2). Ces rayons lumineux transmis par la paroi latérale interne 2 vont intercepter la paroi de réflexion périphérique 3. La surface de cette dernière est alors calculée à l'aide d'un logiciel d'optimisation photométrique, comme LightTools, de manière à ce que les rayons lumineux une fois réfléchis soient parallèles à l'axe optique 5.

Selon une deuxième possibilité, les surfaces de la paroi latérale interne 2 et de la paroi de réflexion périphérique 3 sont calculées simultanément en fixant comme objectif que :
- Un paquet de rayons lumineux issu du foyer 1 ressort du collimateur 200 en étant parallèles à l'axe optique 5 « optimisation en champ lointain »
- Un paquet de rayons lumineux issu du foyer 1 ressorte du collimateur 200 en étant ordonnés régulièrement le long de la paroi de sortie 4 « optimisation en champ proche ».

Cette technique de construction permet de laisser libre choix sur deux paramètres : la tangente de la paroi latérale interne 2 au sommet, c'est-à-dire à l'intersection 8 avec la paroi supérieure interne, et la tangente de la paroi latérale interne 2 à la base, c'est-à-dire à l'intersection 9 avec la paroi de réflexion périphérique 3.

Il est alors possible avec cette technique de fixer que la tangente au sommet passe par le foyer 1 du collimateur 200.

La construction de la tangente de la paroi latérale interne 2 au sommet définit par ailleurs le point de départ de la surface de la paroi supérieure interne 7. La surface convexe de la paroi supérieure interne 7 est par ailleurs configurée classiquement, de sorte à transmettre tout les rayons issus du foyer 1 en un faisceau collimaté.

Par ailleurs, selon une possibilité non illustrée, la paroi de sortie 4 est partagée entre une zone centrale dont la périphérie présente la forme d'un cercle et une zone périphérique encerclant la zone centrale. Dans cas, la zone centrale est configurée pour fonctionner en association avec la paroi supérieure interne 7 et la zone périphérique est configurée pour fonctionner en association avec la paroi latérale interne 2. Cette configuration est notamment obtenue en généralisant les principes de calcul évoqués ci-dessus en incluant ces zones.

Le collimateur 200 ainsi configuré permet d'éviter les pertes de Fresnel. Les rayons p qui auraient conduit à la formation de l'anneau parasite dans une configuration classique sont réfléchis sur la paroi latérale interne 2 avec un angle d'incidence rasante de sorte que ces rayons p sont dirigés vers la paroi supérieure interne 7 où ils sont collectés comme s'ils provenaient directement d'un point proche du foyer 1, comme illustré par les traits pointillés définissant un rayon virtuel. Ces rayons p réfléchis s'ajoutent alors au faisceau principal de sorte que ce dernier gagne en intensité lumineuse tout en limitant la formation d'un anneau parasite.

La figure 4 illustre le chemin d'un rayon e lumineux issu de la périphérie de la source lumineuse et celui d'un rayon i lumineux issu du foyer 1. Ce rayon i issu du foyer 1 est transmis au point A d'une portion convexe 11 de la paroi latérale interne 2, est réfléchi au point A' de la paroi de réflexion périphérique 3 pour émerger de la paroi de sortie 4 de façon sensiblement coaxiale avec l'axe optique 5.

Le rayon e issu de la périphérie de la source est transmis au point B sur la portion convexe 11 de la paroi latérale interne 2. Le prolongement de ce rayon e forme un rayon virtuel qui passe par A. Puis ce rayon e est collecté sur paroi de réflexion périphérique 3 au point B' pour être renvoyé vers la paroi de sortie 4 de sorte à émerger en formant un angle faible avec l'axe optique 5. Ce rayon e est alors ajouté au faisceau collimaté, au contraire d'un rayon e issu du même point éloigné du foyer 1 dans un collimateur 100 classique comme illustré à la figure 2.

Ainsi, la configuration de la portion convexe 11 permet d'intercepter beaucoup plut tôt les rayons e incidents éloignés du foyer 1 du fait de sa position inférieure par comparaison à une paroi latérale rectiligne. Le rayon e est redirigé vers la paroi de réflexion périphérique 3 au lieu de former des lumières parasites (figure 2) ou de conduire à des pertes.

La surface de cette portion convexe 11 est déterminée en considérant un rayon central issu du foyer 1 et réfracté sur la paroi latérale interne 2 en un point d'interception A quelconque et un rayon marginal éloigné du foyer 1 passant également virtuellement par le même point A. Le prolongement du faisceau marginal, appelé rayon virtuel, est illustré en pointillé. Physiquement le rayon marginal intercepte la surface de la portion convexe 11 en un point B distinct du point A. Un point A' définit le point de réflexion sur la paroi de réflexion périphérique 3 du rayon central et un point B' défini le point de réflexion sur la paroi de réflexion périphérique 3 du rayon marginal. La surface de la paroi latérale interne 2 et celle de la paroi de réflexion périphérique 3 sont alors ensuite calculées selon l'une des méthodes explicitées ci-dessus en tenant compte de deux contraintes supplémentaires : les points A et B doivent être distincts et A' doit être plus éloigné du foyer 1 que ne l'est B'.

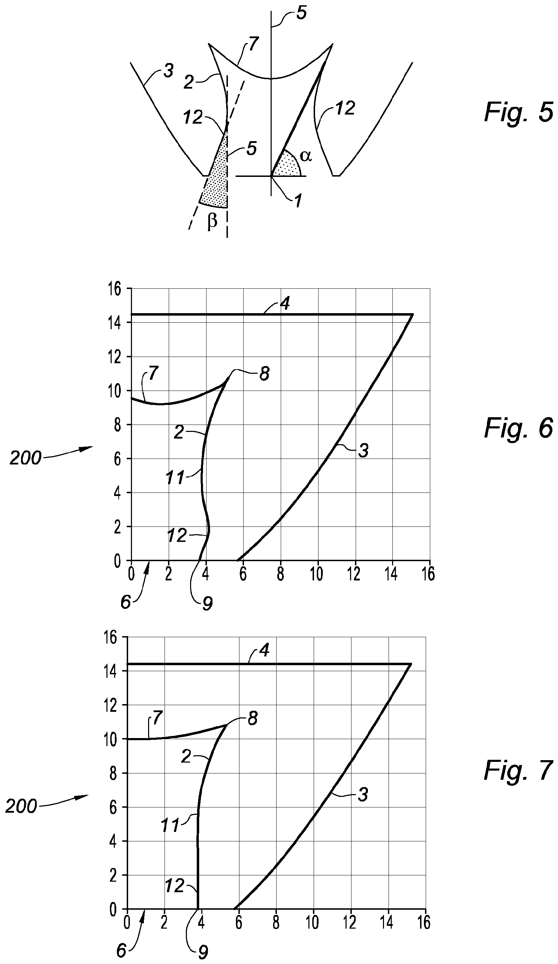

Les figures 4, 6 et 7 illustrent chacune un mode de réalisation qui diffère les un des autres par la configuration de la tangente à la base de la paroi latérale interne 2. Elle est inclinée d'un angle d'environ 20° par rapport à l'axe optique 5 à la figure 4, d'un angle proche de 0° à la figure 6 et de 0° à la figure 7. Ces différents angles permettent d'atteindre une intensité lumineuse optimisée. En effet, ces configurations sont choisies de sorte que la paroi latérale interne 2 comprend une zone annulaire 12 définie depuis le foyer 1 sous angle solide α (alpha) allant de 35° à 90° par rapport à l'axe optique 5 et de sorte que la tangente de la zone annulaire 12 forme un angle β (bêta) pouvant varier entre 0° et 30° par rapport à l'axe optique 5 (se référer à la figure 5). Cette zone annulaire 12 présente alors une pente faiblement prononcée par rapport à l'axe optique 5 de sorte que son extrémité périphérique est au plus près de la source lumineuse qui éclaire alors une grande superficie au voisinage de la surface 4. Or selon la loi de conservation de l'étendue géométrique, le faisceau lumineux est d'autant plus intense que sa section est grande. La zone annulaire 12 telle que définie permet ainsi d'améliorer l'intensité lumineuse du faisceau collimaté.

Par ailleurs, le collimateur 200 est monobloc. Il est de préférence constitué d'un polymère, tel que le silicone, qui confère de la souplesse au collimateur 200. Ceci permet de faciliter le démoulage du collimateur 200 malgré la portion convexe 11 de la paroi latérale interne 2 qui forme une contre-dépouille. D'autres matériaux souples peuvent être utilisés tels que des matériaux thermodurcissables restant souples à température ambiante (dureté shore-A comprise entre 50 et 90) et transparents dans le domaine du visible.

Selon une variante de réalisation non illustré, le collimateur est formé de plusieurs éléments assemblés. Les matériaux utilisés sont par exemple choisi parmi les thermoplastiques tels que le polycarbonate, le PMMA, la cyclo-oléfine copolymère, le polystyrène et le polyamide.

Ainsi, la présente invention propose un collimateur 200 qui permet de limiter les pertes de Fresnel, d'éviter la formation d'un anneau parasite, de refocaliser les faisceaux en périphérie de la source lumineuse, d'augmenter l'intensité lumineuse et d'utiliser des sources lumineuses de grandes dimensions. De plus, ce collimateur 200 formé en silicone est monobloc pour un procédé de fabrication court et simple à réaliser.

## Revendications

1. Collimateur (200) optique destiné à collimater un faisceau issu d'une source lumineuse, le collimateur (200) présentant une forme globale de bol, le collimateur (200) comprenant une symétrie de révolution autour d'un axe optique (5) du collimateur (200), une paroi de sortie (4), un évidement d'entrée (6) opposé à la paroi de sortie (4), l'évidement d'entrée (6) étant défini par une paroi latérale interne (2) et une paroi supérieure interne (7) contiguë à la paroi latérale interne (2) de manière à définir une zone d'intersection (8), la paroi latérale interne (2) et la paroi supérieure interne (7) étant destinées à l'entrée, respectivement périphérique et centrale, d'un faisceau lumineux incident dans le collimateur (200), une paroi de réflexion périphérique (3) joignant la paroi de sortie (4) à la paroi latérale interne (2), **caractérisé en ce que**
la surface de la paroi latérale interne (2) à la zone d'intersection est configurée de sorte qu'une droite (D) tangente à la paroi latérale interne (2) et joignant la zone d'intersection (8) passe par le foyer (1) du collimateur (200), de manière à ce que les rayons (P) réfléchis à incidence rasante par la paroi latérale interne à la zone d'intersection soient redirigés vers la paroi supérieure interne.

2. Collimateur (200) optique selon la revendication 1, dans lequel la paroi latérale interne (2) présente une surface curviligne à symétrie de révolution autour de l'axe optique (5) du collimateur (200).

3. Collimateur (200) selon l'une des revendications 1 à 2, dans lequel la paroi latérale interne (2) comprend une portion convexe (11) configurée de sorte à intercepter en un même point (A) un rayon (i) central issu du foyer (1) et un rayon marginal virtuel prolongeant un rayon marginal réel (e) issu de la périphérie de la source de lumineuse, le rayon marginal réel (e) étant intercepté en un point (B) de la paroi latérale interne (2),
et de sorte que la paroi de réflexion périphérique (3) réfléchisse le rayon (i) central en un point (A') et le rayon marginal réel (e) en un point (B') avec le point (A) distinct du point (B) et le point (A') présentant un éloignement par rapport au foyer (1) plus important que celui du point (B').

4. Collimateur (200) selon l'une des revendications 1 à 3, dans lequel la paroi latérale interne (2) comprend une zone annulaire (12) définie depuis le foyer (1) sous un angle solide (α) compris entre 35° et 90° par rapport à l'axe optique (5), et dans lequel la tangente de la zone annulaire (12) forme un angle (β) compris entre 0° et 30° par rapport à l'axe optique (5).

5. Collimateur (200) selon l'une des revendications 1 à 4, dans lequel le collimateur (200) est monobloc.

6. Collimateur (200) selon l'une des revendications 1 à 5, le collimateur (200) est constitué de polymère.

7. Collimateur (200) selon la revendication 6, dans lequel le polymère est choisi parmi un silicone, une résine de polyuréthane ou tout autre matériau transparent dans le domaine visible, souple à température ambiante, par exemple présentant une dureté shore-A inférieure à 90, de préférence comprise entre 50 et 80 et de préférence encore une dureté shore-A d'environ 70, et thermodurcissable.

8. Collimateur (200) selon l'une des revendications 1 à 7, dans lequel la paroi supérieure interne (7) comprend une portion présentant une surface convexe, de sorte à faire converger les rayons lumineux en provenance du foyer (1).

9. Collimateur (200) selon l'une des revendications 1 à 8, dans lequel la paroi de sortie (4) comprend une portion présentant une surface sensiblement plane.

10. Collimateur (200) selon l'une des revendications 1 à 9, dans lequel la paroi de sortie (4) comprend une portion présentant une surface sensiblement concave.

11. Collimateur (200) selon l'une des revendications 1 à 10, dans lequel la paroi de sortie (4) est partagée entre en une zone centrale et une zone périphérique, la surface de la zone centrale étant configurée pour partager la réfraction des rayons lumineux incidents avec la paroi supérieure interne (7) et la surface de la zone périphérique étant configurée pour fonctionner en association avec la paroi de réflexion périphérique (3).

12. Collimateur (200) selon l'une des revendications 1 à 11, dans lequel la paroi de sortie (4) comprend une microtexturation configurée pour générer un type de faisceau lumineux à partir de la source lumineuse, tel qu'un faisceau intermédiaire, un faisceau large ou un faisceau elliptique.

## Patentansprüche

1. Optischer Kollimator (200), der dazu bestimmt ist, einen aus einer Lichtquelle stammenden Strahl zu kollimieren, wobei der Kollimator (200) eine allgemeine Schalenform aufweist, wobei der Kollimator (200) eine Rotationssymmetrie um eine optische Achse (5) des Kollimators (200), eine Austrittswand (4), eine der Austrittswand (4) gegenüberliegende Eintrittsöffnung (6) umfasst, wobei die Eintrittsöffnung (6) von einer seitlichen Innenwand (2) und einer oberen Innenwand (7) definiert wird, die so an die seitliche Innenwand (2) angrenzt, dass ein Schnittbereich (8) definiert wird, wobei die seitliche Innenwand (2) und die obere Innenwand (7) jeweils für den peripheren und mittigen Eintritt eines in den Kollimator (200) einfallenden Lichtstrahls bestimmt sind, wobei eine periphere Reflexionswand (3) die Austrittswand (4) mit der seitlichen Innenwand (2) verbindet,
**dadurch gekennzeichnet, dass**
die Fläche der seitlichen Innenwand (2) am Schnittbereich derart konfiguriert ist, dass eine Gerade (D), die zur seitlichen Innenwand (2) tangential ist und sich mit dem Schnittbereich (8) verbindet, durch den Brennpunkt (1) des Kollimators (200) verläuft, sodass die Strahlen (P), die mit streifendem Einfall von der seitlichen Innenwand am Schnittbereich reflektiert werden, zur oberen Innenwand umgelenkt werden.

2. Optischer Kollimator (200) nach Anspruch 1, wobei die seitliche Innenwand (2) eine um die optische Achse (5) des Kollimators (200) rotationssymmetrische gekrümmte Fläche aufweist.

3. Kollimator (200) nach einem der Ansprüche 1 bis 2, wobei die seitliche Innenwand (2) einen konvexen Abschnitt (11) umfasst, der konfiguriert ist
derart, dass er einen Mittenstrahl (i), der aus dem Brennpunkt (1) stammt, und einen virtuellen Randstrahl, der einen aus der Peripherie der Lichtquelle stammenden realen Randstrahl (e) verlängert, an ein und demselben Punkt (A) auffängt, wobei der reale Randstrahl (e) an einem Punkt (B) der seitlichen Innenwand (2) aufgefangen wird,
und derart, dass die periphere Reflexionswand (3) den Mittelstrahl (i) an einem Punkt (A') und den realen Randstrahl (e) an einem Punkt (B') reflektiert, wobei sich der Punkt (A) vom Punkt (B) unterscheidet und der Punkt (A') in Bezug auf den Brennpunkt (1) eine Entfernung aufweist, die größer ist als diejenige des Punkts (B').

4. Kollimator (200) nach einem der Ansprüche 1 bis 3, wobei die seitliche Innenwand (2) einen ringförmigen Bereich (12) umfasst, der vom Brennpunkt (1) aus in einem Raumwinkel (α) im Bereich zwischen 35° und 90° in Bezug auf die optische Achse (5) definiert ist, und wobei die Tangente des ringförmigen Bereichs (12) einen Winkel (β) im Bereich zwischen 0° und 30° in Bezug auf die optische Achse (5) bildet.

5. Kollimator (200) nach einem der Ansprüche 1 bis 4, wobei der Kollimator (200) einstückig ist.

6. Kollimator (200) nach einem der Ansprüche 1 bis 5, der Kollimator (200) aus Polymer besteht.

7. Kollimator (200) nach Anspruch 6, wobei das Polymer ausgewählt ist aus einem Silikon, einem Polyurethanharz oder jedem anderen Material, das im sichtbaren Bereich transparent, bei Umgebungstemperatur weich, zum Beispiel eine Shore-A-Härte von unter 90, vorzugweise im Bereich zwischen 50 und 80 und noch bevorzugter eine Shore-A-Härte von etwa 70 aufweisend, und wärmehärtbar ist.

8. Kollimator (200) nach einem der Ansprüche 1 bis 7, wobei die obere Innenwand (7) einen Abschnitt umfasst, der eine konvexe Fläche aufweist, sodass die aus dem Brennpunkt (1) kommenden Lichtstrahlen konvergiert werden.

9. Kollimator (200) nach einem der Ansprüche 1 bis 8, wobei die Austrittswand (4) einen Abschnitt umfasst, der eine im Wesentlichen ebene Fläche aufweist.

10. Kollimator (200) nach einem der Ansprüche 1 bis 9, wobei die Austrittswand (4) einen Abschnitt umfasst, der eine im Wesentlichen konkave Fläche aufweist.

11. Kollimator (200) nach einem der Ansprüche 1 bis 10, wobei die Austrittswand (4) zwischen/in einem/n mittigen Bereich und einem/n peripheren Bereich geteilt ist, wobei die Fläche des mittigen Bereichs dafür konfiguriert ist, die Brechung der einfallenden Lichtstrahlen mit der oberen Innenwand (7) zu teilen, und die Fläche des peripheren Bereichs dafür konfiguriert ist, in Kombination mit der peripheren Reflexionswand (3) zu funktionieren.

12. Kollimator (200) nach einem der Ansprüche 1 bis 11, wobei die Austrittswand (4) eine Mikrotexturierung umfasst, die dafür konfiguriert ist, von der Lichtquelle ausgehend eine Art von Lichtstrahl, wie etwa einen Zwischenstrahl, einen breiten Strahl oder einen elliptischen Strahl zu erzeugen.

## Claims

1. An optical collimator (200) intended to collimate a beam issued from a light source, the collimator (200) having an overall bowl shape, the collimator (200) comprising a symmetry of revolution about an optical axis (5) of the collimator (200), an outlet wall (4), an inlet recess (6) opposite to the outlet wall (4), the inlet recess (6) being defined by an inner side wall (2) and an inner upper wall (7) contiguous to the inner side wall (2) so as to define an intersection area (8), the inner side wall (2) and the inner upper wall (7) being intended for respectively the peripheral and the central entry of an incident light beam in the collimator (200), a peripheral reflection wall (3) joining the outlet wall (4) to the inner side wall (2), **characterized in that** the surface of the inner side wall (2) at the intersection area is configured such that a line (D) tangent to the inner side wall (2) and joining the intersection area (8) passes through the focus (1) of the collimator (200), such that the reflected rays (P) at grazing incidence by the inner side wall to the intersection area are redirected to the inner upper wall.

2. The optical collimator (200) according to claim 1, wherein the inner side wall (2) has a curvilinear surface having a symmetry of revolution about the optical axis (5) of the collimator (200).

3. The collimator (200) according to any of claims 1 to 2, wherein the inner side wall (2) comprises a convex portion (11) configured so as to intercept at a same point (A) a central ray (i) issued from the focus (1) and a virtual marginal ray extending an actual marginal ray (e) issued from the periphery of the light source, the actual marginal ray (e) being intercepted at a point (B) of the inner sidewall (2), and so that the peripheral reflection wall (3) reflects the central ray (i) at a point (A') and the actual marginal ray (e) at a point (B') with the point (A) distinct from the point (B) and the point (A') having a distance from the focus (1) greater than that of the point (B').

4. The collimator (200) according to any of claims 1 to 3, wherein the inner side wall (2) comprises an annular area (12) defined from the focus (1) at a solid angle (α) comprised between 35° and 90° relative to the optical axis (5), and wherein the tangent of the annular area (12) forms an angle (β) comprised between 0° and 30° relative to the optical axis (5).

5. The collimator (200) according to any of claims 1 to 4, wherein the collimator (200) is formed in one-piece.

6. The collimator (200) according to any of claims 1 to 5, the collimator (200) is made of polymer.

7. The collimator (200) according to claim 6, wherein the polymer is selected from a silicone, a polyurethane resin or any other material which is transparent in the visible region, flexible at ambient temperature, for example having a shore-A hardness less than 90, preferably comprised between 50 and 80 and yet preferably a shore-A hardness of about 70, and thermosetting.

8. The collimator (200) according to any of claims 1 to 7, wherein the inner upper wall (7) comprises a portion having a convex surface, so as to converge light rays from the focus (1).

9. The collimator (200) according to any of claims 1 to 8, wherein the outlet wall (4) comprises a portion having a substantially flat surface.

10. The collimator (200) according to any of claims 1 to 9, wherein the outlet wall (4) comprises a portion having a substantially concave surface.

11. The collimator (200) according to any of claims 1 to 10, wherein the output wall (4) is shared between a central area and a peripheral area, the surface of the central area being configured to share the refraction of the incident light rays with the inner upper wall (7) and the surface of the peripheral area being configured to operate in association with the peripheral reflection wall (3).

12. The collimator (200) according to any of claims 1 to 11, wherein the outlet wall (4) comprises a micro-texturing configured to generate a type of light beam from the light source, such as an intermediate beam, a wide beam or an elliptical beam.
